# EUROPEAN PATENT SPECIFICATION

(11) **EP 2 835 754 B1**
(45) Date of publication and mention of the grant of the patent: **21.08.2019**
(21) Application number: 13772859.8
(22) Date of filing: 21.03.2013
(51) Int. Cl.: G06F 21/83, G06F 3/0488, G06F 9/4401, G06F 3/041

(54) **INFORMATION INPUT METHOD, DEVICE, TERMINAL AND STORAGE MEDIUM**
INFORMATIONSEINGABEVERFAHREN, VORRICHTUNG, ENDGERÄT UND SPEICHERMEDIUM
PROCÉDÉ, DISPOSITIF ET TERMINAL D'ENTRÉE D'INFORMATIONS ET SUPPORT DE STOCKAGE

(30) Priority: 06.04.2012 CN 201210099607
(43) Date of publication of application: 11.02.2015
(73) Proprietor: Tencent Technology Shenzhen Company Limited, Shenzhen, Guangdong 518044 (CN)
(72) Inventor: WANG, Qing, Shenzhen Guangdong 518044 (CN); LUO, Zhanghu, Shenzhen Guangdong 518044 (CN); HUANG, Zefeng, Shenzhen Guangdong 518044 (CN); GUO, Haoran, Shenzhen Guangdong 518044 (CN); XIAO, Quanhao, Shenzhen Guangdong 518044 (CN); YUAN, Yixia, Shenzhen Guangdong 518044 (CN); SONG, Jiashun, Shenzhen Guangdong 518044 (CN); LI, Pengtao, Shenzhen Guangdong 518044 (CN); DAI, Yunfeng, Shenzhen Guangdong 518044 (CN); ZHAN, Xunchang, Shenzhen Guangdong 518044 (CN); LIN, Chunyou, Shenzhen Guangdong 518044 (CN)
(74) Representative: Dehns
(86) International application number: PCT/CN2013/072997
(87) International publication number: WO 2013/149553

(56) References cited:
- EP-A2- 1 580 652
- WO-A1-01/98924
- CN-A- 1 673 931
- CN-A- 1 719 368
- CN-A- 101 093 525
- TW-A- 200 905 541
- US-A1- 2008 115 078
- US-A1- 2011 175 826
- "Keyboard tricks for the iPhone and iPad", , 23 February 2012 (2012-02-23), XP054975757, Retrieved from the Internet: URL:https://www.youtube.com/watch?v=Ht1L2Y IEqYA [retrieved on 2015-02-26]

## Description

This application claims the benefit of Chinese Patent Application No. 201210099607.0, filed April 6, 2012, entitled "method and apparatus for inputting information".

### FIELD OF THE DISCLOSURE

The present disclosure relates to telecommunications techniques, and more particularly, to a method, an apparatus, a terminal and a storage medium for inputting information.

### BACKGROUND OF THE DISCLOSURE

With the development of telecommunications techniques and smart terminals, cell phone has become an indispensable communication tool for people.

With the popularization of cell phones, various cell phone applications emerge, followed by Trojan viruses. In conventional techniques, when a user inputs an account/password, the Trojan virus monitors user's keyboard input operation to steal the account and password of the user. Thus, the user information is leaked and security level of the user information is decreased. This issue of Trojan viruses monitoring keyboard input can be reduced if data is entered via a virtual or graphical user interface (GUI) keyboard, rather than a physical keyboard. For example, US 2008/0115078 discloses a system where GUI keyboard is displayed when it is determined that a data entry field is selected by the user, for example by hovering a pointer over an identifier key. The independent claims are characterized over this document.

### SUMMARY OF THE DISCLOSURE

The present invention is defined by the appended independent claims. Examples of the present disclosure provide a method, an apparatus, a terminal and a storage medium for inputting information, so as to increase security level of user information.

According to an aspect of the present disclosure, a method for inputting information is provided. The method includes:
monitoring, by a terminal, a state of an inputting box, wherein the state comprises an active state or a sleep state;
if the terminal monitors that the inputting box is in the active state, calling a virtual keyboard; characterised by:
   configuring, by the terminal, predefined keys of the virtual keyboard to a working state, and locking keys other than the predefined keys on the virtual keyboard; and
   inputting, by the terminal, information in the inputting box using the predefined keys in the working state of the virtual keyboard;
wherein the predefined keys comprise a left shift key for a left shift operation, a determination key for a determination operation and a right shift key for a right shift operation; and
wherein information is inputted in the inputting box by performing an operation to a current cursor on a screen using the predefined keys of the virtual keyboard at the terminal to select one of the locked keys.

The monitoring the state of the inputting box preferably includes:
monitoring, by the terminal, whether a predefined application program performs an activation operation to the inputting box; and
if it is monitored that a predefined application program performs an activation operation to the inputting box, determining that the inputting box is in the active state.

The monitoring the state of the inputting box preferably includes:
monitoring, by the terminal, whether a keyboard calling command transmitted by a predefined application program is received; and
if the keyboard calling command transmitted by the predefined application program is received, determining that the inputting box is in the active state.

The inputting information in the inputting box using the predefined keys of the virtual keyboard preferably includes:
inputting, by the terminal, account information in the inputting box using the predefined keys of the virtual keyboard, wherein the inputting box is an account inputting box; or
inputting, by the terminal, password information in the inputting box using the predefined keys of the virtual keyboard, wherein the inputting box is a password inputting box.

The method includes:
before inputting information in the inputting box using the predefined keys of the virtual keyboard,
configuring, by the terminal, the predefined keys of the virtual keyboard to a working state, and configuring keys other than the predefined keys on the virtual keyboard to a disabled state.

The predefined keys include a left shift key, a determination key and a right shift key.

According to another aspect of the present disclosure, an apparatus for inputting information is provided. The apparatus is applied in a terminal and includes:
a monitoring module, adapted to monitor a state of an inputting box, wherein the state includes an active state or a sleep state;
a calling module, adapted to call a virtual keyboard if it is detected that the inputting box is in the active state; characterised by including:
   a configuring module, adapted to configure predefined keys on the virtual keyboard to a working state, and lock keys other than the predefined keys; and
   an inputting module, adapted to input information in the inputting box using the predefined keys in the working state of the keyboard
wherein the predefined keys comprise a left shift key for a left shift operation, a determination key for a determination operation and a right shift key for a right shift operation; and
wherein information is inputted in the inputting box by performing an operation to a current cursor on a screen using the predefined keys of the virtual keyboard at the terminal to select one of the locked keys.

The monitoring module preferably includes:
a first monitoring unit, adapted to monitor whether a predefined application program performs an activation operation to the inputting box, and determine that the inputting box is in the active state if the predefined application program performs the activation operation to the inputting box.

The monitoring module preferably includes:
a second monitoring unit, adapted to monitor whether a keyboard calling command transmitted by a predefined application program is received, determine that the inputting box is in the active state if the keyboard calling command transmitted by the predefined application program is received.

The inputting module preferably includes:
a first inputting unit, adapted to input account information in the inputting box using the predefined keys in the working state of the virtual keyboard, wherein the inputting box is an account inputting box; or
a second inputting unit, adapted to input password information in the inputting box using the predefined keys in the working state of the virtual keyboard, wherein the inputting box is a password inputting box.

The apparatus includes:
a configuring module, adapted to configure, before information is inputted in the inputting box using the predefined keys of the virtual keyboard, the predefined keys on the virtual keyboard to a working state, and configure keys other than the predefined keys to a disabled state.

Also disclosed herein is a terminal for inputting information. The terminal includes: one or more processors, and one or more program modules stored in a memory, wherein the one or more program modules include instructions executable by the one or more processors to perform acts of:
monitoring a state of an inputting box, wherein the state includes an active state or a sleep state;
if it is detected that the inputting box is in the active state, calling a virtual keyboard;
characterised by:
configuring predefined keys of the virtual keyboard to a working state, and locking keys other than the predefined keys on the virtual keyboard; and
inputting information in the inputting box using predefined keys in the working state of the virtual keyboard;
wherein the predefined keys comprise a left shift key for a left shift operation, a determination key for a determination operation and a right shift key for a right shift operation; and
wherein information is inputted in the inputting box by performing an operation to a current cursor on a screen using the predefined keys of the virtual keyboard at the terminal to select one of the locked keys.

The one or more program modules preferably further include instructions executable by the one or more processors to perform acts of:
monitoring whether an activation operation is performed to the inputting box by an application program;
if it is monitored that the predefined application program activates the inputting box, determining that the inputting box is in the active state.

The one or more program modules preferably further include instructions executable by the one or more processors to perform acts of:
determining whether a keyboard calling command transmitted by an application program is received;
if the keyboard calling command transmitted by the predefined application program is received, determining that the inputting box is in the active state.

The one or more program modules preferably further include instructions executable by the one or more processors to perform acts of:
inputting account information in the inputting box using the predefined keys of the virtual keyboard, wherein the inputting box is an account inputting box; or
inputting password information in the inputting box using the predefined keys of the virtual keyboard; wherein the inputting box is a password inputting box.

The one or more program modules include instructions executable by the one or more processors to perform acts of:
configuring the predefined keys of the virtual keyboard to a working state, and configuring keys other than the predefined keys of the virtual keyboard to a disabled state.

The predefined keys include a left shift key, a determination key and a right shift key.

According to yet another aspect of the present disclosure, a non-transitory storage medium is provided. The non-transitory computer readable storage medium includes a set of instructions for inputting information, the set of instructions to direct at least one processor to perform acts of:
monitoring a state of an inputting box, wherein the state includes an active state or a sleep state;
if it is detected that the inputting box is in the active state, calling a virtual keyboard;
characterised by:
configuring predefined keys of the virtual keyboard to a working state, and locking keys other than the predefined keys on the virtual keyboard; and
inputting information in the inputting box using the predefined keys in the working state of the virtual keyboard;
wherein the predefined keys comprise a left shift key for a left shift operation, a determination key for a determination operation and a right shift key for a right shift operation; and
wherein information is inputted in the inputting box by performing an operation to a current cursor on a screen using the predefined keys of the virtual keyboard at the terminal to select one of the locked keys.

The monitoring the state of the inputting preferably box includes:
monitoring whether an activation operation is performed to the inputting box by an application program;
if it is monitored that the predefined application program activates the inputting box, determining that the inputting box is in the active state.

The monitoring the state of the inputting box preferably includes:
determining whether a keyboard calling command transmitted by an application program is received;
if the keyboard calling command transmitted by the predefined application program is received, determining that the inputting box is in the active state.

The inputting information in the inputting box using the predefined keys of the virtual keyboard preferably includes:
inputting account information in the inputting box using the predefined keys of the virtual keyboard, wherein the inputting box is an account inputting box; or
inputting password information in the inputting box using the predefined keys of the virtual keyboard; wherein the inputting box is a password inputting box.

The storage medium includes:
before inputting information in the inputting box using the predefined keys of the virtual keyboard, configuring the predefined keys of the virtual keyboard to a working state, and configuring keys other than the predefined keys of the virtual keyboard to a disabled state.

The predefined keys include a left shift key, a determination key and a right shift key.

It can be seen from the above technical solution that, the state of the inputting box is monitored. If it is detected that the inputting box is in an active state, a virtual keyboard is called. Information may be inputted in the inputting box via predefined keys of the virtual keyboard. The present disclosure realizes information input through calling the virtual keyboard of the terminal, instead of using a public keyboard (i.e., a physical keyboard or a system keyboard of the terminal). Thus, user information leakage due to being tapped of the public keyboard can be avoided. The security level of the user information is increased.

### BRIEF DESCRIPTION OF THE DRAWINGS

Figures used in the descriptions of the following examples or existing techniques are briefly introduced herein to make the technical solution of the present disclosure clearer. It should be noted that, the following figures are merely some examples. Those skilled in the art would get many variations according to these figures without an inventive work.
FIG. 1 is a flowchart illustrating a method for inputting information according to a first example of the present disclosure.
FIG. 2 is a flowchart illustrating a method for inputting information according to a second example of the present disclosure.
FIG. 3 is a schematic diagram illustrating a first structure of an apparatus for inputting information according to a third example of the present disclosure.
FIG. 4 is a schematic diagram illustrating a second structure of an apparatus for inputting information according to the third example of the present disclosure.
FIG. 5 is a schematic diagram illustrating a third structure of an apparatus for inputting information according to the third example of the present disclosure.
FIG. 6 is a schematic diagram illustrating a terminal for inputting information according to a fourth example of the present disclosure.

### DETAILED DESCRIPTION OF THE DISCLOSURE

The present disclosure is described in further detail hereinafter with reference to accompanying drawings and examples to make the technical solution and merits therein clearer.

### Example 1

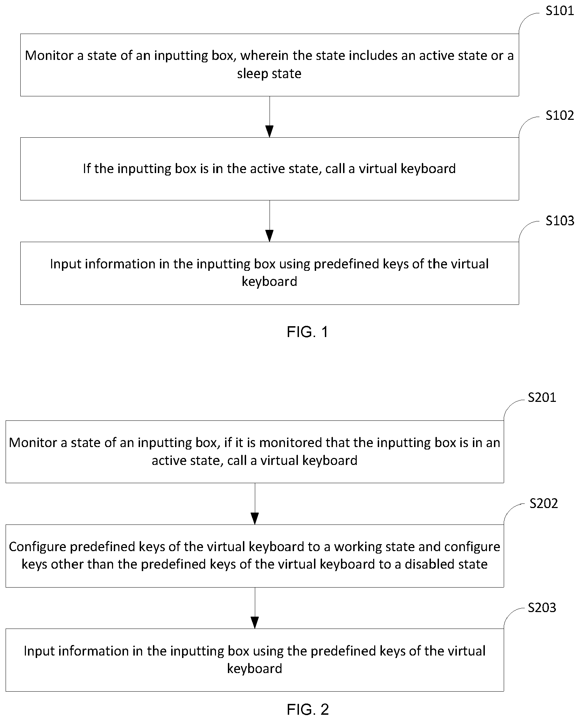

FIG. 1 is a flowchart illustrating a method for inputting information according to a first example of the present disclosure. The execution body of this example may be a terminal, such as a cell phone or a personal computer (PC), but is not limited this. In this example, a predefined application refers to an application program installed in the terminal. The application program may be a system inbuilt application software of the terminal or application software downloaded and installed by the terminal. When using the application software, a user needs to input account/password. For example, the application software has a communication function or a browsing function.

The method for inputting information includes the following.

At block S101, a state of an inputting box is monitored, wherein the state includes an active state or a sleep state.

At block S102, if it is detected that the inputting box is in the active state, a virtual keyboard is called.

At block S103, information is inputted in the inputting box using predefined keys of the virtual keyboard.

The monitoring the state of the inputting box may include the following:
monitoring that whether an activation operation is performed to the inputting box by an application program; and
if it is monitored that the predefined application program activates the inputting box, determining that the inputting box is in the active state.

The monitoring the state of the inputting box may also include:
determining whether a keyboard calling command transmitted by an application program is received;
if the keyboard calling command transmitted by the predefined application program is received, determining that the inputting box is in the active state.

The inputting box may include an account inputting box or a password inputting box.

The process of inputting information in the inputting box using the predefined keys of the virtual keyboard may include:
inputting account information in the inputting box using the predefined keys of the virtual keyboard, or inputting password information in the inputting box using the predefined keys of the virtual keyboard.

Before inputting information in the inputting box using the predefined keys of the virtual keyboard, the method further includes:
configuring the predefined keys of the virtual keyboard to a working state, and configuring keys other than the predefined keys of the virtual keyboard to a disabled state.

The predefined keys include a left shift key, a determination key and a right shift key.

The state of the inputting box is monitored. When it is monitored that the inputting box is in the active state, the virtual keyboard is called. According to the predefined keys of the virtual keyboard, information is inputted in the inputting box. The example of the present disclosure realizes information input via calling a virtual keyboard, instead of using a public keyboard (i.e., a physical keyboard or a system keyboard of the terminal). Thus, user information leakage due to being tapped of the public keyboard can be avoided. The security level of the user information is increased.

### Example 2

FIG. 2 is a flowchart illustrating a method for inputting information according to a second example of the present disclosure. In this example, the execution body of this example may be a terminal, such as a cell phone or a personal computer (PC), but is not limited this. In this example, a predefined application refers to an application program installed in the terminal. The application program may be a system inbuilt application software of the terminal or application software downloaded and installed by the terminal. When using the application software, a user needs to input account/password. For example, the application software has a communication function or a browsing function. A background program in this example refers to a program that users cannot reach directly. It may be a program loaded when system starts for implementing operations such as monitoring the predefined application program, calling the virtual keyboard or inputting information.

The method for inputting information includes the following.

At block S201, a state of an inputting box is monitored, if it is detected that the inputting box is in an active state, a virtual keyboard is called.

In this example, the virtual keyboard is also referred to as a "soft keyboard". It is a keyboard manipulated by software. It may be regarded as a secure and independent virtual keyboard. It is different from a public keyboard of the terminal, i.e., a physical keyboard of the terminal or a system keyboard of the terminal. Using the virtual keyboard, information leakage brought out by inputting account information or password information using the public keyboard, which may be recorded by Trojan virus, can be avoided.

In this block, the inputting box may be an account inputting box or a password inputting box. The state of the inputting box includes an active state or a sleep state. Under the active state, the inputting box receives inputted information. Under the sleep state, information cannot be inputted in the inputting box.

The background program of the terminal monitors the state of the inputting box in real time. In particular, the background program of the terminal may monitor whether a predefined application program performs an activation operation to the inputting box. If it is monitored that an application program performs an activation operation to the inputting box, it is determined that the inputting box is in the active state. Alternatively, the background program of the terminal may monitor whether a keyboard calling command transmitted by the predefined application program is received. If it is monitored that the keyboard calling command transmitted by the predefined application program is received, it is determined that the inputting box is in the active state.

When the predefined application program activates the account inputting box/password inputting box to respectively input account information/password information, the account inputting box/password inputting box is in the active state. The background program of the terminal may detect this operation. Thus, the background program of the terminal may initiatively call the virtual keyboard for the inputting box.

In this example, it is also possible to detect whether a keyboard calling command transmitted by the predefined application program is received to determine whether the inputting box is in the active state. At this time, the background program of the terminal calls the virtual keyboard passively. In particular, when activating the account inputting box/password inputting box to respectively input account information/password information, the predefined application program transmits a keyboard calling command to the background program of the terminal. After receiving the keyboard calling command, the background program of the terminal calls the virtual keyboard according to the keyboard calling command.

At block S202, predefined keys of the virtual keyboard are configured to a working state, and keys other than the predefined keys of the virtual keyboard are configured to a disabled state.

The predefined keysinclude a left shift key for a left shift operation, a right shift key for right shift operation and a determination key for determination operation. The predefined keys may be any three keys on the virtual keyboard. In order to improve user's experience, the determination key may be respectively adjacent to the left shift key and the right shift key.

In one example, the terminal may be a smart phone. For the smart phone with a touch screen, the virtual keyboard displayed on the screen of the smart phone may include 26 letters, 10 figures and the predefined keys (i.e., the left shift key, right shift key and the determination key). The left shift key may be a left arrow key and the right shift key may be a right arrow key. Thus, the user can input his account/password consisting of letters and/or figures through clicking the predefined keys. For example, when the virtual keyboard is displayed, one letter may be in a selected state in default. At this time, if the user clicks the determination key, the default letter is inputted into the inputting box. If the user does not want to select the default letter, the user can click the right shift key or the left shift key to select other letters or figures.

In another example, not in accordance with the present invention, the terminal may be a personal computer or a cell phone with a physical keypad. For the personal computer or the cell phone with physical keypad, the virtual keyboard displayed on a screen of the personal computer or the cell phone may include 26 letters and 10 figures. At this time, the virtual keyboard displayed on the screen does not include the predefined keys. The predefined keys may correspond to keys on the public keyboard of the personal computer or the cell phone. For example, the right shift key
corresponds to the left arrow key on the public keyboard, the right shift key may correspond to the right arrow key on the public keyboard, and the determination key corresponds to a key between the left arrow key and the right arrow key on the public keyboard. Alternatively, the left shift key may be numeric key 4, the determination key may be the numeric key 5, and the right shift key may be the numeric key 6. It should be noted that, the present disclosure is not restricted to this.

In this block, after calling the virtual keyboard, the background program of the terminal configures the predefined keys of the virtual keyboard to the working state and configures keys other than the predefined keys to the disabled state, i.e., lock keys other than the predefined keys on the virtual keyboard. Thus, the user can only input information through clicking the predefined keys.

At block S203, information is inputted in the inputting box using predefined keys of the virtual keyboard.

In this block, if the inputting box is an account inputting box, the background program of the terminal performs an operation to a current cursor on the screen using the predefined keys on the virtual keyboard, i.e., the left shift key, right shift key and the determination key, so as to realize account information input.

If the inputting box is a password inputting box, the background program of the terminal performs an operation to a current cursor on the screen using the predefined keys on the virtual keyboard, i.e., the left shift key, right shift key and the determination key, so as to realize password information input.

The present disclosure is not restricted to call the virtual keyboard when the account information or password information is inputted. In order to avoid user information leakage due to tapping of the public keyboard, the virtual keyboard may also be utilized to realize input of other information.

In this example, the state of the inputting box is monitored. When it is monitored that the inputting box is in the active state, the virtual keyboard is called. According to the predefined keys of the virtual keyboard, information is inputted in the inputting box. The example of the present disclosure realizes information input via calling a virtual keyboard, instead of using a public keyboard (i.e., a physical keyboard or a system keyboard of the terminal). Thus, user information leakage due to being tapped of the public keyboard can be avoided. The security level of the user information is increased.

### Example 3

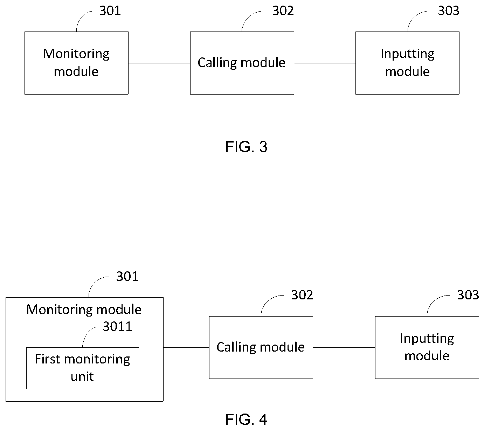

FIG. 3 is a schematic diagram illustrating a first structure of an apparatus for inputting information according to a third example of the present disclosure. In this example, the apparatus implementing the information input may be a terminal, such as a cell phone or a personal computer (PC), or a functional module or an application program of the terminal, which is not restricted in the present disclosure.

In this example, a predefined application refers to an application program installed in the terminal. The application program may be a system inbuilt application software of the terminal or application software downloaded and installed by the terminal. When using the application software, a user needs to input account/password. For example, the application software has a communication function or a browsing function.

A background program in this example refers to a program that users cannot reach directly. It may be a program loaded when system starts for implementing operations such as monitoring the predefined application program, calling the virtual keyboard or inputting information.

The apparatus for inputting information includes:
a monitoring module 301, adapted to monitor a state of an inputting box, wherein the state includes an active state or a sleep state;
a calling module 302, adapted to call a virtual keyboard if it is detected that the inputting box is in the active state; and
an inputting module 303, adapted to input information in the inputting box according to predefined keys of the keyboard.

In one example, the monitoring module 301 further includes: a first monitoring unit 3011, as shown in FIG. 4 which is a schematic diagram illustrating a second structure of the apparatus for inputting information according to the third example of the present disclosure.

The first monitoring unit is adapted to monitor whether a predefined application program performs an activation operation to the inputting box, determine that the inputting box is in the active state if a predefined application program performs an activation operation to the inputting box.

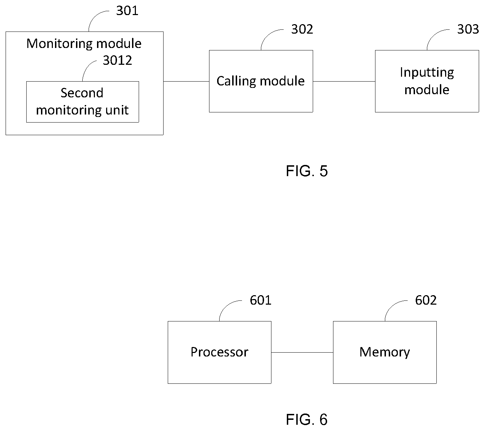

Alternatively, the monitoring module 301 may include a second monitoring unit 3012, as shown in FIG. 5 which is a schematic diagram illustrating a third structure of the apparatus for inputting information according to the third example of the present disclosure.

The second monitoring unit 3012 is adapted to monitor whether a keyboard calling command transmitted by the predefined application program is received, determine that the inputting box is in the active state if a keyboard calling command transmitted by the predefined application program is received.

In another example, the inputting box includes an account inputting box or a password inputting box.

The inputting module 303 includes:
a first inputting unit, adapted to input account information in the account inputting box using the predefined keys on the virtual keyboard; or
a second inputting unit, adapted to input password information in the password inputting box using the predefined keys on the virtual keyboard.

Besides the calling module 301 and the inputting module 302, the apparatus further includes a configuring module.

The configuring module is adapted to configure, before information is inputted in the inputting box using the predefined keys of the virtual keyboard, the predefined keys on the virtual keyboard to a working state, and configure keys other than the predefined keys to a disabled state.

The predefined keys include a left shift key, a determination key and a right shift key.

In one example, the determination key is respectively adjacent to the left shift key and the right shift key.

In this example, the state of the inputting box is monitored. When it is monitored that the inputting box is in the active state, the virtual keyboard is called. Using the predefined keys of the virtual keyboard, information is inputted in the inputting box. The example of the present disclosure realizes information input via calling a virtual keyboard, instead of using a public keyboard (i.e., a physical keyboard or a system keyboard of the terminal). Thus, user information leakage due to being tapped of the public keyboard can be avoided. The security level of the user information is increased.

### Example 4

FIG. 6 is a schematic diagram illustrating a structure of a terminal according to a fourth example of the present disclosure. The terminal includes one or more processors 601, a memory 602; and one or more program modules stored in the memory 602 and executable by the one or more processors 601; wherein the one or more program modules include instructions for performing acts of:
monitoring a state of an inputting box, wherein the state includes an active state or a sleep state;
if it is detected that the inputting box is in the active state, calling a virtual keyboard; and
inputting information in the inputting box using predefined keys of the virtual keyboard.

In one example, instructions for performing following operations are further included:
monitoring whether an activation operation is performed to the inputting box by an application program;
if it is monitored that the predefined application program activates the inputting box, determining that the inputting box is in the active state.

In one example, instructions for performing following operations are further included:
determining whether a keyboard calling command transmitted by an application program is received;
if the keyboard calling command transmitted by the predefined application program is received, determining that the inputting box is in the active state.

In one example, instructions for performing following operations are further included:
inputting account information in the inputting box using the predefined keys of the virtual keyboard, wherein the inputting box is an account inputting box; or
inputting password information in the inputting box using the predefined keys of the virtual keyboard; wherein the inputting box is a password inputting box.

Instructions for performing following operations are further included:
configuring the predefined keys of the virtual keyboard to a working state, and configuring keys other than the predefined keys of the virtual keyboard to a disabled state.

The predefined keys include a left shift key, a determination key and a right shift key.

The state of the inputting box is monitored. When it is monitored that the inputting box is in the active state, the virtual keyboard is called. According to the predefined keys of the virtual keyboard, information is inputted in the inputting box. The example of the present disclosure realizes information input via calling a virtual keyboard, instead of using a public keyboard (i.e., a physical keyboard or a system keyboard of the terminal). Thus, user information leakage due to being tapped of the public keyboard can be avoided. The security level of the user information is increased.

### Example 5

This example provides a non-transitory computer readable storage medium, including a set of instructions executable by one or more processors to the input information method. The storage medium may be a computer readable memory, such as a disk or compact disk. The method includes:
monitoring a state of an inputting box, wherein the state includes an active state or a sleep state;
if it is detected that the inputting box is in the active state, calling a virtual keyboard; and
inputting information in the inputting box using predefined keys of the virtual keyboard.

In one example, the monitoring the state of the inputting box includes:
monitoring whether an activation operation is performed to the inputting box by an application program;
if it is monitored that the predefined application program activates the inputting box, determining that the inputting box is in the active state.

In one example, the monitoring the state of the inputting box includes:
determining whether a keyboard calling command transmitted by an application program is received;
if the keyboard calling command transmitted by the predefined application program is received, determining that the inputting box is in the active state.

In another example, the inputting information in the inputting box using the predefined keys of the virtual keyboard include:
inputting account information in the inputting box using the predefined keys of the virtual keyboard, wherein the inputting box is an account inputting box; or
inputting password information in the inputting box using the predefined keys of the virtual keyboard; wherein the inputting box is a password inputting box.

Before inputting information in the inputting box using the predefined keys of the virtual keyboard, the method further includes:
configuring the predefined keys of the virtual keyboard to a working state, and configuring keys other than the predefined keys of the virtual keyboard to a disabled state.

The predefined keys include a left shift key, a determination key and a right shift key.

The state of the inputting box is monitored. When it is monitored that the inputting box is in the active state, the virtual keyboard is called. According to the predefined keys of the virtual keyboard, information is inputted in the inputting box. The example of the present disclosure realizes information input via calling a virtual keyboard, instead of using a public keyboard (i.e., a physical keyboard or a system keyboard of the terminal). Thus, user information leakage due to being tapped of the public keyboard can be avoided. The security level of the user information is increased.

It should be noted that, the examples of the present disclosure are described progressively. For each example, difference of the example with respect to other examples is described in emphasis. Detailed description of other parts of the example may be seen from other examples. For the apparatus examples, detailed functions and operations of the modules may be seen from corresponding method examples.

It should be noted that, terms such as "first", "second" are merely used to differentiate one entity or operation from another, but not denote any sequence order or relationship between the entities or operations. The term "includes" means includes but not limited to, the term "including" means including but not limited to. The term "based on" means based at least in part on. In addition, the terms "a" and "an" are intended to denote at least one of a particular element.

Those with ordinary skill in the art would know that all or some of the blocks of the present disclosure may be implemented by hardware, or implemented by a program executed on a relevant hardware. The program may be stored on a computer readable storage medium.

What has been described and illustrated herein is a preferred example of the disclosure along with some of its variations. Many variations are possible within the scope of the disclosure, which is intended to be defined by the following claims -- and their equivalents -- in which all terms are meant in their broadest reasonable sense unless otherwise indicated.

## Claims

1. A method for inputting information, comprising:
monitoring, by a terminal, a state of an inputting box, wherein the state comprises an active state or a sleep state (S101);
if the terminal monitors that the inputting box is in the active state, calling a virtual keyboard (S102, S201); **characterised by**
configuring, by the terminal, predefined keys of the virtual keyboard to a working state, and locking keys other than the predefined keys on the virtual keyboard(S202); and
inputting, by the terminal, information in the inputting box using the predefined keys in the working state of the virtual keyboard (S203);
wherein the predefined keys comprise a left shift key for a left shift operation, a determination key for a determination operation and a right shift key for a right shift operation; and
wherein information is inputted in the inputting box by performing an operation to a current cursor on a screen using the predefined keys of the virtual keyboard at the terminal to select one of the locked keys.

2. The method of claim 1, wherein the monitoring the state of the inputting box comprises:
monitoring, by the terminal, whether a predefined application program performs an activation operation to the inputting box; and
if it is monitored that a predefined application program performs an activation operation to the inputting box, determining that the inputting box is in the active state.

3. The method of claim 1, wherein the monitoring the state of the inputting box comprises:
monitoring, by the terminal, whether a keyboard calling command transmitted by a predefined application program is received; and
if the keyboard calling command transmitted by the predefined application program is received, determining that the inputting box is in the active state.

4. An apparatus for inputting information, comprising:
a monitoring module (301), adapted to monitor a state of an inputting box, wherein the state comprises an active state or a sleep state;
a calling module (302), adapted to call a virtual keyboard if it is detected that the inputting box is in the active state; **characterised by** comprising:
a configuring module, adapted to configure predefined keys on the virtual keyboard to a working state, and lock keys other than the predefined keys; and
an inputting module (303), adapted to input information in the inputting box using the predefined keys in the working state of the keyboard;
wherein the predefined keys comprise a left shift key for a left shift operation, a determination key for a determination operation and a right shift key for a right shift operation; and
wherein information is inputted in the inputting box by performing an operation to a current cursor on a screen using the predefined keys of the virtual keyboard at the terminal to select one of the locked keys.

5. The apparatus of claim 4, wherein the monitoring module comprises:
a first monitoring unit (3011), adapted to monitor whether a predefined application program performs an activation operation to the inputting box, and determine that the inputting box is in the active state if the predefined application program performs the activation operation to the inputting box.

6. The apparatus of claim 4, wherein the monitoring module comprises:
a second monitoring unit (3012), adapted to monitor whether a keyboard calling command transmitted by a predefined application program is received, and determine that the inputting box is in the active state if the keyboard calling command transmitted by the predefined application program is received.

7. A storage medium, comprising one or more programs executable by one or more processors to perform a method for inputting information, the method comprises:
monitoring a state of an inputting box, wherein the state comprises an active state or a sleep state (S201);
if it is detected that the inputting box is in the active state, calling a virtual keyboard (S201); **characterised by**
configuring, by a terminal, predefined keys of the virtual keyboard to a working state, and locking keys other than the predefined keys on the virtual keyboard (S202); and
inputting information in the inputting box using the predefined keys in the working state of the virtual keyboard (S203);
wherein the predefined keys comprise a left shift key for a left shift operation, a determination key for a determination operation and a right shift key for a right shift operation; and
wherein information is inputted in the inputting box by performing an operation to a current cursor on a screen using the predefined keys of the virtual keyboard at the terminal to select one of the locked keys.

8. The storage medium of claim 7, wherein the monitoring the state of the inputting box comprises:
monitoring whether an activation operation is performed to the inputting box by an application program;
if it is monitored that the predefined application program activates the inputting box, determining that the inputting box is in the active state.

9. The storage medium of claim 7, wherein the monitoring the state of the inputting box comprises:
determining whether a keyboard calling command transmitted by an application program is received;
if the keyboard calling command transmitted by the predefined application program is received, determining that the inputting box is in the active state.

## Patentansprüche

1. Verfahren zum Eingeben von Informationen, umfassend:
Überwachen, durch ein Endgerät, eines Zustands einer Eingabebox, wobei der Zustand einen aktiven Zustand oder einen Ruhezustand umfasst (S101);
falls das Endgerät überwacht, dass die Eingabebox im aktiven Zustand ist, Aufrufen einer virtuellen Tastatur (S102, S201); **gekennzeichnet durch**
Konfigurieren, durch das Endgerät, vordefinierter Tasten der virtuellen Tastatur zu einem funktionierenden Zustand und Sperren von anderen Tasten als den vordefinierten Tasten auf der virtuellen Tastatur (S202); und
Eingeben, durch das Endgerät, von Informationen in die Eingabebox unter Verwendung der vordefinierten Tasten im funktionierenden Zustand der virtuellen Tastatur (S203);
wobei die vordefinierten Tasten eine linke Hochstelltaste für einen linken Hochstellbetrieb, eine Bestimmungstaste für einen Bestimmungsbetrieb und eine rechte Hochstelltaste für einen rechten Hochstellbetrieb umfassen; und
wobei Informationen in die Eingabebox durch Durchführen eines Betriebs an einem aktuellen Zeiger auf einem Bildschirm unter Verwendung der vordefinierten Tasten der virtuellen Tastatur beim Endgerät eingegeben werden, um eine der gesperrten Tasten auszuwählen.

2. Verfahren nach Anspruch 1, wobei das Überwachen des Zustands der Eingabebox umfasst:
Überwachen, durch das Endgerät, ob ein vordefiniertes Anwendungsprogramm einen Aktivierungsbetrieb an der Eingabebox durchführt; und
falls überwacht wird, dass ein vordefiniertes Anwendungsprogramm einen Aktivierungsbetrieb an der Eingabebox durchführt, Bestimmen, dass die Eingabebox im aktiven Zustand ist.

3. Verfahren nach Anspruch 1, wobei das Überwachen des Zustands der Eingabebox umfasst:
Überwachen, durch das Endgerät, ob ein Tastaturaufrufbefehl, der durch ein vordefiniertes Anwendungsprogramm übertragen wird, empfangen wird; und
falls der Tastaturaufrufbefehl, der durch das vordefinierte Anwendungsprogramm übertragen wird, empfangen wird, Bestimmen, dass die Eingabebox im aktiven Zustand ist.

4. Einrichtung zum Eingeben von Informationen, umfassend:
ein Überwachungsmodul (301), angepasst, einen Zustand einer Eingabebox zu überwachen, wobei der Zustand einen aktiven Zustand oder einen Ruhezustand umfasst;
ein Aufrufmodul (302), angepasst, eine virtuelle Tastatur aufzurufen, falls erfasst wird, dass die Eingabebox im aktiven Zustand ist; **gekennzeichnet durch** umfassend:
ein Konfiguriermodul, angepasst, vordefinierte Tasten auf der virtuellen Tastatur zu einem funktionierenden Zustand zu konfigurieren, und andere Tasten als die vordefinierten Tasten zu sperren; und
ein Eingabemodul (303), angepasst, Informationen in die Eingabebox unter Verwendung der vordefinierten Tasten im funktionierenden Zustand der Tastatur einzugeben;
wobei die vordefinierten Tasten eine linke Hochstelltaste für einen linken Hochstellbetrieb, eine Bestimmungstaste für einen Bestimmungsbetrieb und eine rechte Hochstelltaste für einen rechten Hochstellbetrieb umfassen; und
wobei Informationen in die Eingabebox durch Durchführen eines Betriebs an einem aktuellen Zeiger auf einem Bildschirm unter Verwendung der vordefinierten Tasten der virtuellen Tastatur beim Endgerät eingegeben werden, um eine der gesperrten Tasten auszuwählen.

5. Einrichtung nach Anspruch 4, wobei das Überwachungsmodul umfasst:
eine erste Überwachungseinheit (3011), angepasst zu überwachen, ob ein vordefiniertes Anwendungsprogramm einen Aktivierungsbetrieb an der Eingabebox durchführt, und zu bestimmen, dass die Eingabebox im aktiven Zustand ist, falls das vordefinierte Anwendungsprogramm den Aktivierungsbetrieb an der Eingabebox durchführt.

6. Einrichtung nach Anspruch 4, wobei das Überwachungsmodul umfasst:
eine zweite Überwachungseinheit (3012), angepasst zu überwachen, ob ein Tastaturaufrufbefehl, der durch ein vordefiniertes Anwendungsprogramm übertragen wird, empfangen wird, und zu bestimmen, dass die Eingabebox im aktiven Zustand ist, falls der Tastaturaufrufbefehl, der durch das vordefinierte Anwendungsprogramm übertragen wird, empfangen wird.

7. Speichermedium, umfassend ein oder mehrere Programme, die durch einen oder mehrere Prozessoren ausführbar sind, um ein Verfahren zum Eingeben von Informationen durchzuführen, das Verfahren umfassend:
Überwachen eines Zustands einer Eingabebox, wobei der Zustand einen aktiven Zustand oder einen Ruhezustand umfasst (S201);
falls erfasst wird, dass die Eingabebox im aktiven Zustand ist, Aufrufen einer virtuellen Tastatur (S201); **gekennzeichnet durch**
Konfigurieren, durch ein Endgerät, vordefinierter Tasten der virtuellen Tastatur zu einem funktionierenden Zustand und Sperren von anderen Tasten als den vordefinierten Tasten auf der virtuellen Tastatur (S202); und
Eingeben von Informationen in die Eingabebox unter Verwendung der vordefinierten Tasten im funktionierenden Zustand der virtuellen Tastatur (S203);
wobei die vordefinierten Tasten eine linke Hochstelltaste für einen linken Hochstellbetrieb, eine Bestimmungstaste für einen Bestimmungsbetrieb und eine rechte Hochstelltaste für einen rechten Hochstellbetrieb umfassen; und
wobei Informationen in die Eingabebox durch Durchführen eines Betriebs an einem aktuellen Zeiger auf einem Bildschirm unter Verwendung der vordefinierten Tasten der virtuellen Tastatur beim Endgerät eingegeben werden, um eine der gesperrten Tasten auszuwählen.

8. Speichermedium nach Anspruch 7, wobei das Überwachen des Zustands der Eingabebox umfasst:
Überwachen, ob ein Aktivierungsbetrieb an der Eingabebox durch ein Anwendungsprogramm durchgeführt wird;
falls überwacht wird, dass das vordefinierte Anwendungsprogramm die Eingabebox aktiviert, Bestimmen, dass die Eingabebox im aktiven Zustand ist.

9. Speichermedium nach Anspruch 7, wobei das Überwachen des Zustands der Eingabebox umfasst:
Bestimmen, ob ein Tastaturaufrufbefehl, der durch ein Anwendungsprogramm übertragen wird, empfangen wird;
falls der Tastaturaufrufbefehl, der durch das vordefinierte Anwendungsprogramm übertragen wird, empfangen wird, Bestimmen, dass die Eingabebox im aktiven Zustand ist.

## Revendications

1. Verfahren zum Eingeben von Informationen, umfassend:
Überwachen, durch ein Endgerät, eines Zustands einer Eingabebox, wobei der Zustand einen aktiven Zustand oder einen Ruhezustand umfasst (S101);
falls das Endgerät überwacht, dass die Eingabebox im aktiven Zustand ist, Aufrufen einer virtuellen Tastatur (S102, S201); **gekennzeichnet durch**
Konfigurieren, durch das Endgerät, vordefinierter Tasten der virtuellen Tastatur zu einem funktionierenden Zustand und Sperren von anderen Tasten als den vordefinierten Tasten auf der virtuellen Tastatur (S202); und
Eingeben, durch das Endgerät, von Informationen in die Eingabebox unter Verwendung der vordefinierten Tasten im funktionierenden Zustand der virtuellen Tastatur (S203);
wobei die vordefinierten Tasten eine linke Hochstelltaste für einen linken Hochstellbetrieb, eine Bestimmungstaste für einen Bestimmungsbetrieb und eine rechte Hochstelltaste für einen rechten Hochstellbetrieb umfassen; und
wobei Informationen in die Eingabebox durch Durchführen eines Betriebs an einem aktuellen Zeiger auf einem Bildschirm unter Verwendung der vordefinierten Tasten der virtuellen Tastatur beim Endgerät eingegeben werden, um eine der gesperrten Tasten auszuwählen.

2. Verfahren nach Anspruch 1, wobei das Überwachen des Zustands der Eingabebox umfasst:
Überwachen, durch das Endgerät, ob ein vordefiniertes Anwendungsprogramm einen Aktivierungsbetrieb an der Eingabebox durchführt; und
falls überwacht wird, dass ein vordefiniertes Anwendungsprogramm einen Aktivierungsbetrieb an der Eingabebox durchführt, Bestimmen, dass die Eingabebox im aktiven Zustand ist.

3. Verfahren nach Anspruch 1, wobei das Überwachen des Zustands der Eingabebox umfasst:
Überwachen, durch das Endgerät, ob ein Tastaturaufrufbefehl, der durch ein vordefiniertes Anwendungsprogramm übertragen wird, empfangen wird; und
falls der Tastaturaufrufbefehl, der durch das vordefinierte Anwendungsprogramm übertragen wird, empfangen wird, Bestimmen, dass die Eingabebox im aktiven Zustand ist.

4. Einrichtung zum Eingeben von Informationen, umfassend:
ein Überwachungsmodul (301), angepasst, einen Zustand einer Eingabebox zu überwachen, wobei der Zustand einen aktiven Zustand oder einen Ruhezustand umfasst;
ein Aufrufmodul (302), angepasst, eine virtuelle Tastatur aufzurufen, falls erfasst wird, dass die Eingabebox im aktiven Zustand ist; **gekennzeichnet durch** umfassend:
ein Konfiguriermodul, angepasst, vordefinierte Tasten auf der virtuellen Tastatur zu einem funktionierenden Zustand zu konfigurieren, und andere Tasten als die vordefinierten Tasten zu sperren; und
ein Eingabemodul (303), angepasst, Informationen in die Eingabebox unter Verwendung der vordefinierten Tasten im funktionierenden Zustand der Tastatur einzugeben;
wobei die vordefinierten Tasten eine linke Hochstelltaste für einen linken Hochstellbetrieb, eine Bestimmungstaste für einen Bestimmungsbetrieb und eine rechte Hochstelltaste für einen rechten Hochstellbetrieb umfassen; und
wobei Informationen in die Eingabebox durch Durchführen eines Betriebs an einem aktuellen Zeiger auf einem Bildschirm unter Verwendung der vordefinierten Tasten der virtuellen Tastatur beim Endgerät eingegeben werden, um eine der gesperrten Tasten auszuwählen.

5. Einrichtung nach Anspruch 4, wobei das Überwachungsmodul umfasst:
eine erste Überwachungseinheit (3011), angepasst zu überwachen, ob ein vordefiniertes Anwendungsprogramm einen Aktivierungsbetrieb an der Eingabebox durchführt, und zu bestimmen, dass die Eingabebox im aktiven Zustand ist, falls das vordefinierte Anwendungsprogramm den Aktivierungsbetrieb an der Eingabebox durchführt.

6. Einrichtung nach Anspruch 4, wobei das Überwachungsmodul umfasst:
eine zweite Überwachungseinheit (3012), angepasst zu überwachen, ob ein Tastaturaufrufbefehl, der durch ein vordefiniertes Anwendungsprogramm übertragen wird, empfangen wird, und zu bestimmen, dass die Eingabebox im aktiven Zustand ist, falls der Tastaturaufrufbefehl, der durch das vordefinierte Anwendungsprogramm übertragen wird, empfangen wird.

7. Speichermedium, umfassend ein oder mehrere Programme, die durch einen oder mehrere Prozessoren ausführbar sind, um ein Verfahren zum Eingeben von Informationen durchzuführen, das Verfahren umfassend:
Überwachen eines Zustands einer Eingabebox, wobei der Zustand einen aktiven Zustand oder einen Ruhezustand umfasst (S201);
falls erfasst wird, dass die Eingabebox im aktiven Zustand ist, Aufrufen einer virtuellen Tastatur (S201); **gekennzeichnet durch**
Konfigurieren, durch ein Endgerät, vordefinierter Tasten der virtuellen Tastatur zu einem funktionierenden Zustand und Sperren von anderen Tasten als den vordefinierten Tasten auf der virtuellen Tastatur (S202); und
Eingeben von Informationen in die Eingabebox unter Verwendung der vordefinierten Tasten im funktionierenden Zustand der virtuellen Tastatur (S203);
wobei die vordefinierten Tasten eine linke Hochstelltaste für einen linken Hochstellbetrieb, eine Bestimmungstaste für einen Bestimmungsbetrieb und eine rechte Hochstelltaste für einen rechten Hochstellbetrieb umfassen; und
wobei Informationen in die Eingabebox durch Durchführen eines Betriebs an einem aktuellen Zeiger auf einem Bildschirm unter Verwendung der vordefinierten Tasten der virtuellen Tastatur beim Endgerät eingegeben werden, um eine der gesperrten Tasten auszuwählen.

8. Speichermedium nach Anspruch 7, wobei das Überwachen des Zustands der Eingabebox umfasst:
Überwachen, ob ein Aktivierungsbetrieb an der Eingabebox durch ein Anwendungsprogramm durchgeführt wird;
falls überwacht wird, dass das vordefinierte Anwendungsprogramm die Eingabebox aktiviert, Bestimmen, dass die Eingabebox im aktiven Zustand ist.

9. Speichermedium nach Anspruch 7, wobei das Überwachen des Zustands der Eingabebox umfasst:
Bestimmen, ob ein Tastaturaufrufbefehl, der durch ein Anwendungsprogramm übertragen wird, empfangen wird;
falls der Tastaturaufrufbefehl, der durch das vordefinierte Anwendungsprogramm übertragen wird, empfangen wird, Bestimmen, dass die Eingabebox im aktiven Zustand ist.
